(19) Europäisches Patentamt
European Patent Office
Office européen des brevets

(11) **EP 3 069 896 A1**

(12) **EUROPÄISCHE PATENTANMELDUNG**

(43) Veröffentlichungstag:
21.09.2016 Patentblatt 2016/38

(51) Int Cl.:
*B60B 3/14* (2006.01)     *B60B 3/16* (2006.01)

(21) Anmeldenummer: **16159598.8**

(22) Anmeldetag: **10.03.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **13.03.2015 DE 102015103679**

(71) Anmelder: **Grasdorf Rad GmbH**
**31188 Holle OT Sottrum (DE)**

(72) Erfinder: **Krinke, Dipl.-Ing. Martin**
**09599 Freiberg (DE)**

(74) Vertreter: **Sperling, Thomas**
**Sperling, Fischer & Heyner**
**Patentanwälte**
**Tolkewitzer Straße 22**
**01277 Dresden (DE)**

(54) **LOCHKREISVERSTÄRKUNG**

(57) Die Erfindung betrifft eine Lochkreisverstärkung (1) zur Befestigung eines Achsflansches (4) an einer Felge, umfassend eine Scheibe (9) mit einer zentralen Bohrung (5) und einer Vielzahl von Bohrungen (6), die in gleichmäßigem Abstand kreisförmig um die zentrale Bohrung (5) angeordnet sind und zur Aufnahme von Fixiermitteln geeignet sind und bei der der äußere Rand (7) der Scheibe (9) an einer Kante (8-1) abgerundet ist.

Fig. 1

**Beschreibung**

Die Erfindung betrifft eine Lochkreisverstärkung zur Befestigung eines Achsflansches an einer Felge, umfassend eine Scheibe mit einer zentralen Bohrung und einer Vielzahl von Bohrungen, die in gleichmäßigem Abstand kreisförmig um die zentrale Bohrung angeordnet sind und zur Aufnahme von Fixiermitteln geeignet sind sowie eine Verwendung der Lochkreisverstärkung.

Des Weiteren betrifft die Erfindung ein Scheibenrad.

Eine Verbindung von Achsflansch und Rad erfolgt normalerweise über einen Reibschluss mittels einer Schraubverbindung. Die Anschlussmaße für diese Verbindungen sind nach DIN 74361 vorgegeben. Somit sind auch maximal übertragbare Drehmomente begrenzt. Durch Weiterentwicklung von Antriebsund Getriebetechnik übersteigen die zu übertragenden Momente zunehmend die Möglichkeiten der vorgegeben Radanschlüsse.

Die umlaufenden Biegemomente kann man durch geeignete Schüsselpressbilder auffangen, was aber zu Einschränkungen hinsichtlich der Fertigungsflexibilität führt.

Weiterhin existiert zur Minimierung von aus Anzugsmomenten der Radmutter resultierenden Druckspannungen eine Druckscheibe, welche zwischen den Muttern und der eigentlichen Felgenscheibe montiert wird.

Durch diese bekannten Ausführungsformen können Druckspannungen, die durch das Anziehen der Radmuttern entstehen, verringert werden. Sowohl das Problem der Übertragung des Antriebsmomentes bei gegebenen Anschlussmaßen, als auch die Schadenswirkung durch umlaufende Biegemomente bleibt jedoch weiter bestehen.

Die Aufgabe der Erfindung besteht daher darin, einen verbesserten Radanschluss vorzulegen, bei dem die Antriebsmomentübertragung optimiert und Biegemomenteinflüsse minimiert werden.

Die Aufgabe wird durch eine Lochkreisverstärkung mit den Merkmalen gemäß Patentanspruch 1 gelöst. Weiterbildungen sind in den abhängigen Patentansprüchen angegeben.

Die vorliegende Erfindung stellt eine Lochkreisverstärkung (Traktionsscheibe) zur Befestigung eines Achsflansches an einer Felge, beispielsweise einer Fahrzeugfelge, umfassend eine Scheibe mit einer zentralen Bohrung (Mittelloch) und einer Vielzahl von Bohrungen, die in gleichmäßigem Abstand kreisförmig um die zentrale Bohrung angeordnet sind und zur Aufnahme von Fixiermitteln geeignet sind, bereit, bei der der äußere Rand der Scheibe an einer Kante abgerundet ist. Dabei ist die zentrale Bohrung zur Aufnahme eines Teils der Achse eines Fahrzeuges oder zur Befestigung eines Achsflansches geeignet, wobei der Achsflansch durch Fixiermittel, wie zum Beispiel Schrauben, die durch die kreisförmig angeordneten Bohrungen geführt werden, mit der Lochkreisverstärkung fixierbar.

In einer bevorzugten Ausführungsform der Erfindung weist der äußere Rand der Scheibe an einer ersten Kante einen rechten Winkel auf und ist an der der ersten Kante gegenüberliegenden zweiten Kante abgerundet.

Die abgerundete Form der (Außen-)Kante der Scheibe hat den Vorteil, dass die Kerbwirkung, welche den materialschädigenden Einfluss des umlaufenden Biegemoments erhöht, verringert werden kann. Somit kann das Auftreten von Schadensfällen und damit einhergehenden Produktionsreklamationen, die bei bekannten Lochkreisverstärkungen auftreten, minimiert werden. Dies geschieht zum einen durch die geringere Schadenswirkung des Biegemoments und zum anderen durch die bessere Übertragung des Drehmoments, denn durch den höheren Reibkoeffizienten wird der Einfluss von Radmuttern mit zu geringer Klemmkraft (zum Beispiel durch Streuung von Anzugsmomenten, ein Standarddrehmomentschlüssel hat einen Anziehfaktor von 1,7 bis 2,5), die rutschen und die Bolzenlöcher beschädigen, deutlich reduziert.

Die Scheibe der Lochkreisverstärkung ist vorzugsweise ganz oder teilweise mit einer Oberflächenbeschichtung, die eine erhöhte Reibung aufweist, beschichtet, wodurch die Reibung zwischen Scheibe und Achsflansch bzw. Felgenscheibe weiter erhöht wird.

Die Oberflächenbeschichtung ist vorzugsweise eine sandpapierartige Beschichtung zur Erhöhung der Reibung.

In einer weiteren bevorzugten Ausführungsform der Erfindung weist die Scheibe ganz oder teilweise eine angeraute Oberfläche auf. Eine solche angeraute Oberfläche kann durch mechanisches Anrauen der Oberfläche hergestellt werden. Es ist aber auch denkbar, die Oberfläche mit einer Struktur zu versehen, die der Oberfläche einen erhöhten Reibungswiderstand verleiht.

Des Weiteren wird die Aufgabe der vorliegenden Patentanmeldung durch eine Verwendung der erfindungsgemäßen Lochkreisverstärkung zur Befestigung eines Achsflansches einer Achse mit der Felgenscheibe einer Felge gelöst. Durch eine solche Montage der Lochkreisverstärkung zwischen Achsflansch und Rad wird der Radanschluss durch Optimierung der Antriebsmomentübertragung und Reduzierung der Biegemomenteinflüsse verbessert.

Die Lochkreisverstärkung wird vorzugsweise mit der Seite der Scheibe an der sich die abgerundete Kante befindet mit der Felgenscheibe verbunden.

Des Weiteren wird die Aufgabe der vorliegenden Erfindung durch ein Scheibenrad gelöst, bei dem eine erfindungsgemäße Lochkreisverstärkung direkt in der (Rad-)Schüssel des Scheibenrades integriert ist.

Weiterhin wird die Aufgabe der vorliegenden Erfindung durch ein Scheibenrad gelöst, bei dem eine Lockkreisverstärkung an der Schüssel des Scheibenrades fixiert ist.

Bevorzugt ist die Lockkreisverstärkung mit der Schüssel des Scheibenrades verschweißt oder verschraubt.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Im Einzelnen zeigt:

Figur 1:   einen Querschnitt durch eine Felgenscheibe und eine Achse mit Flansch zwischen denen eine erfindungsgemäße Lochkreisverstärkung angeordnet ist,

Figur 2a:   eine erfindungsgemäße Lochkreisverstärkung und

Figur 2b:   einen Querschnitt an einer Linie A-A durch eine erfindungsgemäße Lochkreisverstärkung.

Die erfindungsgemäße Lochkreisverstärkung 1 findet hauptsächlich in der Landwirtschaft bei Zugmaschinen, wie Traktoren oder Schleppern hoher Leistungsklasse zur Verbesserung der Drehmomentsübertragung zwischen Achse und Rad, sowie der Reduzierung der Beanspruchung durch umlaufende Biegemomente, Anwendung.

Mögliche Ausführungsformen der erfindungsgemäßen Lochkreisverstärkung 1 sind:

1) Als lose Scheibe zum Unterlegen zwischen einem Scheibenrad und einem Achsflansch 4.

2) In der (Rad-)Schüssel eines Scheibenrades direkt integriert. Hier wird nur die Anlagefläche, deren Durchmesser beispielsweise nach DIN 74361 definiert ist, mit der Oberflächenbeschichtung versehen.

3) In der (Rad-)Schüssel eines Scheibenrades indirekt integriert. Hier wird eine Scheibe 9, deren Dicke größer ist als die der eigentlichen Schüssel eingeschweißt. Diese Scheibe 9 erhält die Oberflächenbeschichtung 10 (Traktionsbeschichtung) und den beispielsweise nach DIN 74361 definierten Radanschluss.

4) Wie Ausführungsform (3) nur geschraubt anstatt geschweißt.

Die Ausführungsform (1) ist geeignet zum Nachrüsten bei bestehenden Radsätzen, während die Ausführungsformen (2) bis (4) für neue Radsätze geeignet sind.

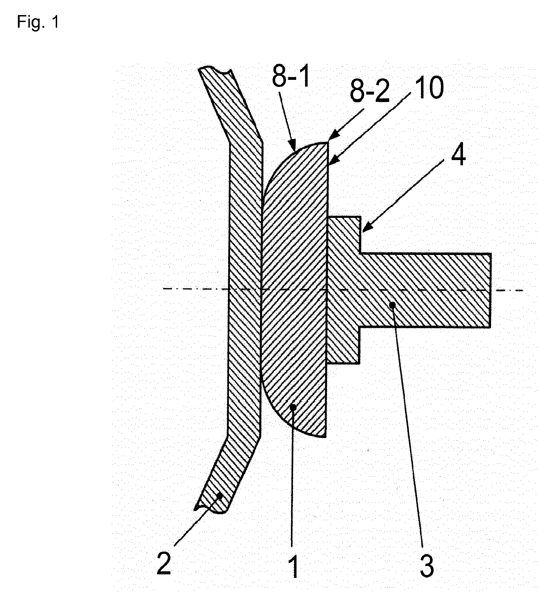

In Figur 1 ist ein Querschnitt durch eine Lochkreisverstärkung (Traktionsscheibe) 1, die zwischen einer Felgenscheibe 2 und einer Achse 3 mit (Achs-)Flansch 4 angeordnet ist, dargestellt.

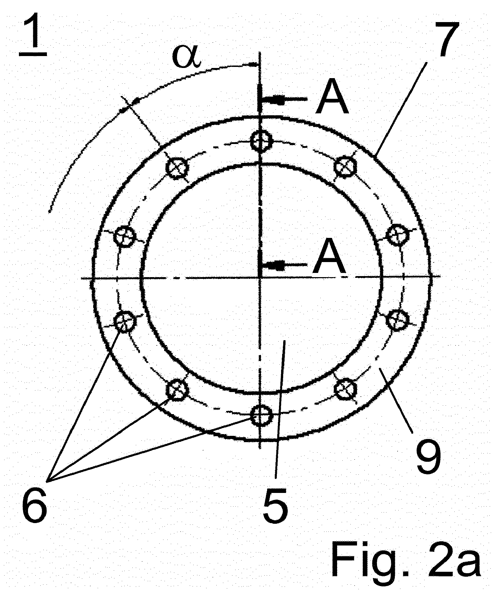

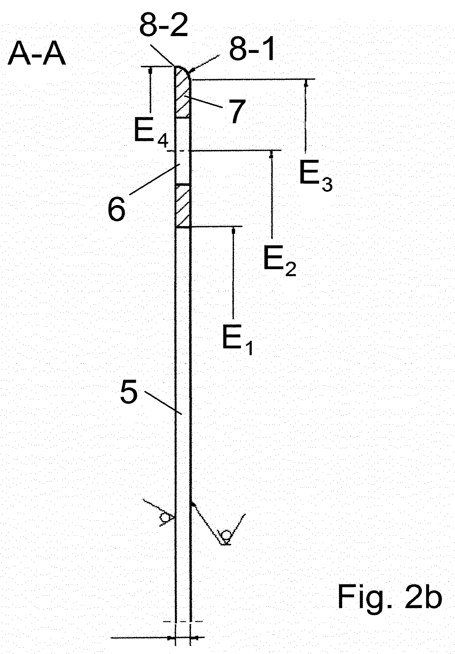

In der Figur 2a wird eine erfindungsgemäße Lochkreisverstärkung 1 und in der Figur 2b ein Querschnitt an einer Linie A-A durch die in Figur 2a gezeigte Lochkreisverstärkung 1 gezeigt.

Die in der Figur 2a gezeigte Lochkreisverstärkung 1 weist eine zentrale Bohrung 5 und kreisförmig, um die zentrale Bohrung 5 angeordnete Bohrungen 6 auf. Die Bohrungen 6 sind zur Aufnahme von, in der Figur 2a nicht dargestellten, Fixiermitteln, wie beispielsweise Schrauben, geeignet, mit denen die Lochkreisverstärkung 1 mit der Felgenscheibe 2 und/oder dem Achsflansch 4 verbindbar ist. Die in der Figur 2a gezeigte Lochkreisverstärkung 1 weist 10 Bohrungen 6 auf, die in einem Winkel $\alpha$ von 36 ° angeordnet sind. Es sind aber auch andere Ausführungen denkbar bei denen die Lochkreisverstärkung 1 acht oder eine andere Anzahl von Bohrungen 6 aufweist.

Der in der Figur 2b gezeigte Querschnitt der Lochkreisverstärkung 1 an der Linie A-A weist an seinem äußeren Rand eine abgerundete Kante 8-1 und eine Kante 8-2 auf, die einen rechten Winkel bildet.

Es sind aber auch Ausführungsformen der Erfindung denkbar, bei denen der äußere Rand 7 der Scheibe 9 auf beiden Seiten der Lochkreisverstärkung 1 abgerundet ist.

Sämtliche Anschlussmaße (wie Innendurchmesser, Teilkreisdurchmesser und Außendurchmesser) sind schlepperseitig, sowie gegebenenfalls nach DIN 74361, vorgegeben und sollten dementsprechend ausgeführt sein. Exemplarisch ist in der Figur 2b eine Ausführung passend zum Standardradanschluss 10x335x281x24 zyl. nach DIN 74361-3 dargestellt. Es ist aber auch möglich die Lochkreisverstärkung 1 in anderen Größenverhältnissen herzustellen.

Die Entfernung $E_1$ vom Mittelpunkt der Lochkreisverstärkung 1 bis zum Rand der zentralen Bohrung 5 beträgt beispielsweise 281 mm (Mittelloch/Centerloch), die Entfernung $E_2$ bis zum Mittelpunkt der Bohrung 6 335 mm (Lochkreisdurchmesser/Bolzenlochkreis), die Entfernung $E_3$ bis zum Beginn der Abrundung der Kante 8-1 385 mm und die Entfernung $E_4$ bis zum äußeren Rand 7 395 mm.

Die Stärke der Scheibe 9 kann variieren, da sie von der Länge der am Fahrzeug (Schlepper) vorhandenen Stehbolzen abhängig ist. Die Stärke der Scheibe 9 sollte jedoch mindestens 5 mm betragen, da sonst die Wirkung des Radius 8-1 verloren gehen würde.

Die Lochkreisverstärkung 1 wird geeigneter Weise aus Stahl hergestellt. Der Werkstoff, aus dem die Scheibe 9 gefertigt wird, ist hinsichtlich der Streckgrenze mindestens S355J2G3.

Durch die reibwerterhöhende (Oberflächen-)Beschichtung 10 wird die Übertragung des Antriebsmonents verbessert.

Die Klemmkraft und die Länge des Hebels zur Erzeugung des erforderlichen Reibmoments sind durch die Anschlussmaße am Achsflansch 4 vorgegeben und somit nicht verlängerbar. Somit bleibt zur Erhöhung des Reibmoments nur die Möglichkeit, den Reibkoeffizienten zu verbessern (siehe Formel I).

$$M_{Antrieb} > M_{Reibschluss} = F_{Klemm} \times l_{Hebel} \times \mu_R \qquad (I),$$

mit M = Drehmoment (Nmm), F = (Klemm-)Kraft, l = Länge des Hebels und $\mu$ = Reibwert (Reibkoeffizient), wobei sich die Klemmkraft gemäß der Formel II berechnet:

$$F_{Klemm} = \frac{2 \, x \, M}{n \, x \, \mu_T \, x \, d_L} \qquad (II)$$

mit M = Drehmoment (Nmm), n = Anzahl der Schrauben, $\mu_T$ = Haftwert Trennfuge und $d_L$ = Lochkreisdurchmesser.

Die Lochkreisverstärkung 1 kann sowohl vollständig mit einer Oberflächenbeschichtung 10 versehen oder angeraut sein als auch nur teilweise. So sind Ausführungsformen denkbar, bei den nur die Stellen der Lochkreisverstärkung 1 eine Oberfläche mit einer erhöhten Reibung aufweisen, die mit der Felgenscheibe 2 oder dem Achsflansch 4 in Berührung kommen.

In einer weiteren Ausführungsform weist die Lochkreisverstärkung 1 nur auf einer Seite der Scheibe 9 eine Oberflächenbeschichtung (Traktionsbeschichtung) 10 oder eine raue/strukturierte Oberfläche auf.

Geeignete Oberflächenbeschichtungen 10 sind beispielsweise Beschichtungen, die aus einem Lack bestehen, der Partikel, wie Sandpartikel, enthält und die einen erhöhten Reibungswiderstand erzeugen, wenn der Lack, nach dem Auftragen eingetrocknet ist und so die Oberflächenbeschichtung 10 strapazierbar ausgebildet ist. Es können aber auch Kunststoffbeschichtungen, beispielsweise aus gummiartigen Materialien, verwendet werden.

Die Oberflächenbeschichtung 10 der Lochkreisverstärkung 1 beziehungsweise der Scheibe 9 erfolgt beispielsweise nach dem Plasma-Coating System PC 430.

**Bezugszeichenliste**

| | |
|---|---|
| 1 | Lochkreisverstärkung, Traktionsscheibe |
| 2 | Felgenscheibe |
| 3 | Achse |
| 4 | Achsflansch |
| 5 | zentrale Bohrung |
| 6 | Bohrung |
| 7 | äußerer Rand |
| 8-1 | abgerundete Kante |
| 8-2 | Kante |
| 9 | Scheibe |
| 10 | Oberflächenbeschichtung, Traktionsbeschichtung |
| $\alpha$ | Winkel (Winkelabschnitt in der Scheibe 9) |
| $E_1$ | Entfernung zwischen dem Mittelpunkt der Lochkreisverstärkung 1 und dem Rand der zentralen Bohrung 5 |
| $E_2$ | Entfernung zwischen dem Mittelpunkt der Lochkreisverstärkung 1 und dem Mittelpunkt der zentralen Bohrung 5 |
| $E_3$ | Entfernung zwischen dem Mittelpunkt der Lochkreisverstärkung 1 und dem Beginn der Abrundung der Kante 8-1 |
| $E_4$ | Entfernung zwischen dem Mittelpunkt der Lochkreisverstärkung 1 und dem äußeren Rand 7 |

**Patentansprüche**

1. Lochkreisverstärkung (1) zur Befestigung eines Achsflansches (4) an einer Felge umfassend eine Scheibe (9) mit einer zentralen Bohrung (5) und einer Vielzahl von Bohrungen (6), die in gleichmäßigem Abstand kreisförmig um die zentrale Bohrung (5) angeordnet sind und zur Aufnahme von Fixiermitteln geeignet sind, **dadurch gekennzeichnet, dass** der äußere Rand (7) der Scheibe (9) an einer Kante (8-1) abgerundet ist.

2. Lochkreisverstärkung (1) nach Anspruch 1, **dadurch gekennzeichnet, dass** der äußere Rand (7) der Scheibe (9) an einer ersten Kante (8-2) einen rechten Winkel aufweist und an der der ersten Kante gegenüberliegenden zweiten Kante (8-1) abgerundet ist.

3. Lochkreisverstärkung (1) nach Anspruch 1 oder 2, **dadurch gekennzeichnet, dass** die Scheibe (9) ganz oder teilweise mit einer Oberflächenbeschichtung (10), die eine erhöhte Reibung aufweist, beschichtet ist.

4. Lochkreisverstärkung (1) nach Anspruch 3, **dadurch gekennzeichnet, dass** die Oberflächenbeschichtung (10) eine Beschichtung, die Partikel zur Erhöhung der Reibung enthält, ist.

5. Lochkreisverstärkung (1) nach Anspruch 1 oder 2, **dadurch gekennzeichnet, dass** die Scheibe (9) ganz oder teilweise eine angeraute Oberfläche aufweist.

6. Verwendung einer Lochkreisverstärkung (1) nach einem der vorhergehenden Ansprüche zur Befestigung eines Achsflansches (4) einer Achse (3) mit der Felgenscheibe (2) einer Felge.

7. Verwendung nach Anspruch 6, **dadurch gekennzeichnet, dass** die Lochkreisverstärkung (1) mit der Seite der Scheibe (9) an der sich eine abgerundete Kante (8-1) befindet mit der Felgenscheibe (2) verbunden wird.

8. Scheibenrad, **dadurch gekennzeichnet, dass** eine Lochkreisverstärkung 1, gemäß einem der Ansprüche 1 bis 5, direkt in der Schüssel des Scheibenrades integriert ist.

9. Scheibenrad, **dadurch gekennzeichnet, dass** eine Lockkreisverstärkung 1, gemäß einem der Ansprüche 1 bis 5, an der Schüssel des Scheibenrades fixiert ist.

10. Scheibenrad nach Anspruch 9, **dadurch gekennzeichnet, dass** die Lockkreisverstärkung 1 mit der Schüssel des Scheibenrades verschweißt oder verschraubt ist.

Fig. 1

Fig. 2a

Fig. 2b

**Europäisches Patentamt**
**European Patent Office**
**Office européen des brevets**

# EUROPÄISCHER RECHERCHENBERICHT

Nummer der Anmeldung

EP 16 15 9598

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 3 759 576 A (RICHTER R) 18. September 1973 (1973-09-18) | 1,2,6,7, 9,10 | INV. B60B3/14 |
| A | * Abbildungen 1,5 * | 3-5,8 | B60B3/16 |
| | ----- | | |
| X | EP 0 888 909 A2 (HOEFFKEN RUEDIGER [DE]) 7. Januar 1999 (1999-01-07) * das ganze Dokument * | 1,2,6,7, 9,10 | |
| | ----- | | |
| X | DE 42 15 072 A1 (REMOTEC DIETER WIPPERFUERTH GM [DE]) 9. September 1993 (1993-09-09) * Abbildungen 1,9,17-20 * | 1,2,6,7, 9,10 | |
| | ----- | | |
| X | US 5 362 134 A (CARMONA FEDERICO [IT]) 8. November 1994 (1994-11-08) * das ganze Dokument * | 1,6,7 | |
| | ----- | | |

**RECHERCHIERTE SACHGEBIETE (IPC)**

B60B

Der vorliegende Recherchenbericht wurde für alle Patentansprüche erstellt

| Recherchenort | Abschlußdatum der Recherche | Prüfer |
|---|---|---|
| München | 16. August 2016 | Cipriano, Pedro |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 16 15 9598

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-08-2016

| Im Recherchenbericht angeführtes Patentdokument | | Datum der Veröffentlichung | Mitglied(er) der Patentfamilie | | | Datum der Veröffentlichung |
|---|---|---|---|---|---|---|
| US 3759576 | A | 18-09-1973 | KEINE | | | |
| EP 0888909 | A2 | 07-01-1999 | AT | 251552 | T | 15-10-2003 |
| | | | DE | 29711384 | U1 | 11-09-1997 |
| | | | DK | 0888909 | T3 | 16-02-2004 |
| | | | EP | 0888909 | A2 | 07-01-1999 |
| | | | ES | 2209004 | T3 | 16-06-2004 |
| | | | PT | 888909 | E | 27-02-2004 |
| DE 4215072 | A1 | 09-09-1993 | DE | 4215072 | A1 | 09-09-1993 |
| | | | EP | 0584311 | A1 | 02-03-1994 |
| | | | WO | 9317883 | A1 | 16-09-1993 |
| US 5362134 | A | 08-11-1994 | AT | 158541 | T | 15-10-1997 |
| | | | DE | 69314066 | D1 | 30-10-1997 |
| | | | DE | 69314066 | T2 | 09-04-1998 |
| | | | EP | 0553696 | A2 | 04-08-1993 |
| | | | IT | 1258062 | B | 20-02-1996 |
| | | | JP | H0752601 | A | 28-02-1995 |
| | | | US | 5362134 | A | 08-11-1994 |

EPO FORM P0461

Für nähere Einzelheiten zu diesem Anhang : siehe Amtsblatt des Europäischen Patentamts, Nr.12/82